# EUROPEAN PATENT APPLICATION

(11) **EP 3 543 822 A1**
(43) Date of publication of application: **25.09.2019**
(21) Application number: 18163798.4
(22) Date of filing: 23.03.2018
(51) Int. Cl.: G06F 1/16, H05K 5/00, H05K 5/02, H04M 1/18

(54) **A PROTECTION ARRANGEMENT FOR A DISPLAY DEVICE**

(71) Applicant: Vestel Elektronik Sanayi ve Ticaret A.S., 45030 Manisa (TR)
(72) Inventor: Özmen, Ferhat, 45030 Manisa (TR); Akdemir, Onur, 45030 Manisa (TR)
(74) Representative: Beck Greener LLP

(57) **Abstract**

In an embodiment, there is provided a display device comprising an outer housing and a display panel arranged within the outer housing, the display device further comprising one or more protection elements, wherein each protection element is automatically movable between a first position in which the protection element is stored during normal use of the display device and a second position in which the protection element extends from the outer housing to protect the display device during transportation in response to a user command.

## Description

The present invention relates to a protection arrangement for a display device. More particularly, the present invention relates to an integrated protection and transportation arrangement for a flat screen display panel to prevent damage during transit and relocation of the display device.

Recently, there has been a drive towards ever smaller and thinner flat screen display devices. For example, in the field of LCD, LED and OLED flat screen televisions and monitors, it is desirable to reduce the width of the bezels surrounding the display panel. This makes the display device smaller for a given screen size, and makes the device more aesthetically pleasing for the user.

However, the reduction in size of the bezel and support structure of a display device reduces the strength of this structure, potentially exposing the fragile display panel itself to increased stresses and strains when the display device is being moved, for example, during transportation, installation or removal prior to reinstallation elsewhere. Therefore, there is an increased risk that a display panel may be irreparably damaged during transportation.

One solution to this issue is to provide a specialised carrying container for the display device where a display device is placed in a strengthened support structure to enable transportation of the display device. Examples of such packaging devices are disclosed in US 2013/0277253, US 2008/0067096 and US 2014/0097117.

However, a drawback to these solutions is that the packaging devices require separate storage space when not in use, and it may be cumbersome and time-consuming to load the display device into the respective packaging device prior to transportation.

Therefore, to date, known arrangements and methods suffer from the drawback that known transportation arrangements for protecting a display device are inconvenient and cumbersome.

The present invention, in embodiments, addresses this issue.

According to a first aspect of the present invention, there is provided a display device comprising an outer housing and a display panel arranged within the outer housing, the display device further comprising one or more protection elements, wherein each protection element is automatically movable between a first position in which the protection element is stored during normal use of the display device and a second position in which the protection element extends from the outer housing to protect the display device during transportation in response to a user command.

In one embodiment, the or each protection element comprises a mechanical arm arranged to pivot away from a surface of the housing.

In one embodiment, the or each protection element is biased from the first to the second position by means of a biasing arrangement.

In one embodiment, the movement of the or each protection element is actuated by electronic means.

In one embodiment, the movement of the or each protection device is actuated by a motor.

In one embodiment, the protection element is configured to form a part of the outer housing when in the first position.

In one embodiment, in the second position the or each protection element extends from the sides of the display device.

In one embodiment, the display device further comprises a cable release arrangement having first and second positions, wherein in the first position the cable release arrangement is configured such that one or more cable connectors remain connected to the respective connector ports of the display device and in the second position the cable support arrangement is configured to release the cables from the display device, wherein the cable release arrangement is automatically movable from the respective first position to the respective second position in response to the user command.

In one embodiment, the cable release arrangement comprises one or more clamps and/or one or more biasing arrangements.

In one embodiment, the cable release arrangement is movable electronically.

In one embodiment, the cable release arrangement is movable by means of a motor.

According to a second aspect of the present invention, there is provided a method for protecting a display device during transportation, the display device comprising an outer housing and display panel arranged within the outer housing, method comprising the steps of: activating, in response to a user command, a transportation mode of the display device, and in response to said activation: automatically moving one or more protection elements of the display device from a first position in which the or each protection element is stored during normal use of the display device to a second position in which the protection element extends from the outer housing to protect the display device during transportation.

In one embodiment, the method further comprises automatically moving a cable release arrangement from a first position in which the cable release arrangement is configured such that one or more cable connectors remain connected to the respective connector ports of the display device to a second position in which the cable support arrangement is configured to release the cables from the display device.
In one embodiment, the one or more protection elements are actuated electronically to move from the respective first position to the respective second position.

In one embodiment, once actuated, the or each protection element is biased from the first to the second position by means of a biasing arrangement.

Embodiments of the present invention will now be described in detail with reference to the accompanying drawings, in which:
Figure 1 is a general view of an exemplary display device;
Figure 2 is a schematic front view of a display device having a transportation arrangement according to embodiment of the present invention, where the transportation arrangement is shown in a first configuration;
Figure 3 is a schematic feature block view of a transportation arrangement according to an embodiment;
Figure 4 is a schematic front view of the display device of Figure 2 showing the transportation arrangement in a second configuration;
Figure 5 is an isometric view of the display device of Figure 4 with the transportation arrangement in the second configuration;
Figure 6 is a plan view of the display device shown in Figures 4 and 5;
Figure 7 is a side view of the display device shown in Figures 4 to 6;
Figure 8 is a bottom view of the display device shown in Figures 4 to 7;
Figure 9 is a rear view of the display device of Figures 2 to 8; and
Figure 10 is a flow chart showing a method according to an embodiment of the present invention.

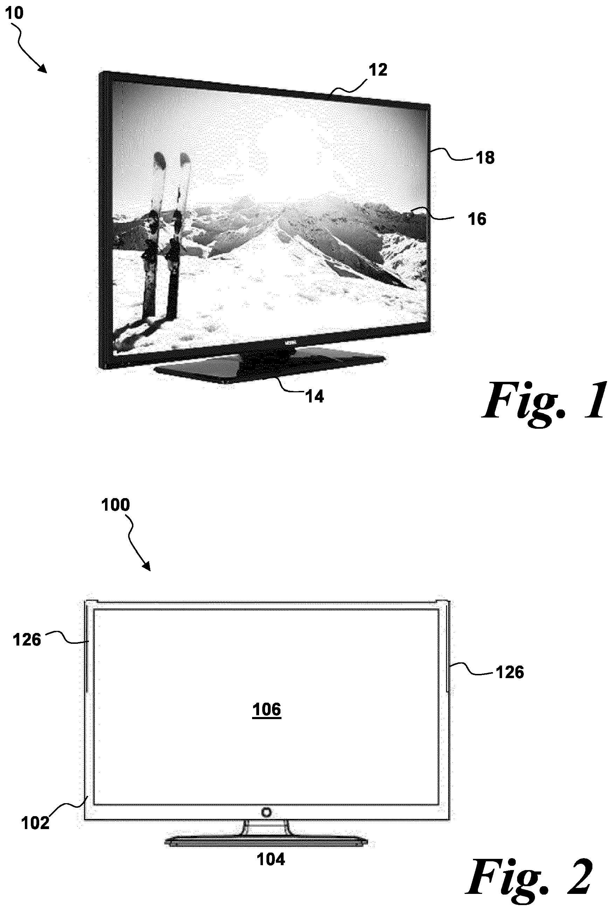

Figure 1 shows an exemplary display device 10 in the form of a flat panel television. The display device 10 has an outer housing 12 supported by a stand 14. A display panel 16 is located within the outer housing 12.

In this example, the display panel 16 comprises a Light Emitting Diode (LED) television display, where an array of LEDs are used to illuminate a Liquid Crystal Display (LCD) panel. However, this is not to be taken as limiting and other types of display may be used; for example, direct LED (D-LED) LCD displays, plasma displays, Organic Light Emitting Diode (OLED) displays, standard LCD panels or any other suitable display panel. The precise type of display panel used is not material to the invention, although in general the display panel will be a flat display panel.

As shown in Figure 1, the outer housing 12 comprises a bezel 18 which supports, surrounds and protects the display panel 16 in use. End users generally prefer narrower bezels and a smaller outer housing 12. However, this causes problems in terms of supporting the display panel 16 and preventing the display panel 16 from becoming damaged during removal from an installation location and subsequent transportation. The present invention addresses, in embodiments, this issue.

Figure 2 shows a display device 100 according to an embodiment of the present invention. The display device 100 comprises a housing 102, a stand 104 and a display panel 106.

A display device 100 further comprises a transportation arrangement 108. The transportation arrangement 108 is configured, in use, to enable safe removal and transportation of the display device 100 and to minimise the risk of damage to the display panel 106.

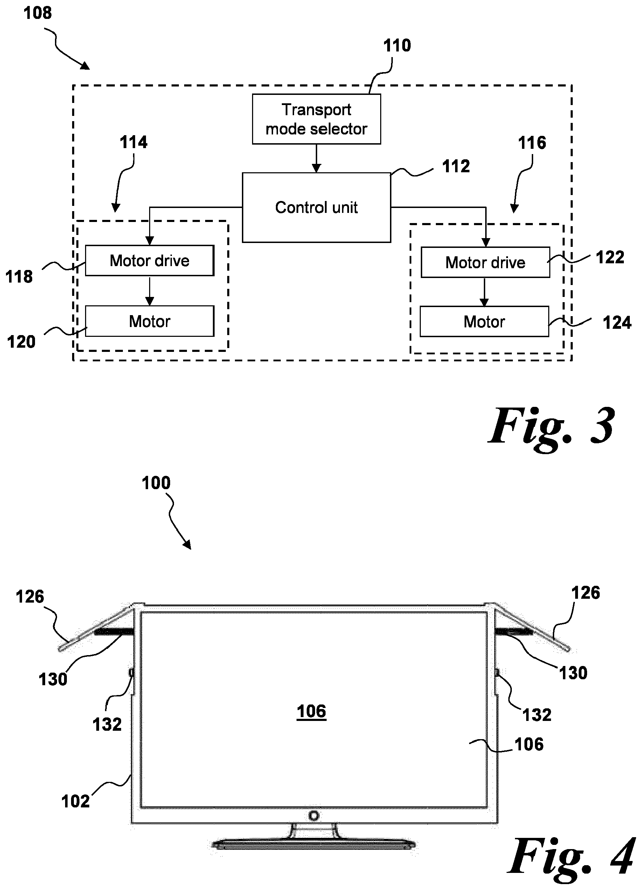

The transportation arrangement 108 is shown schematically in Figure 3. The transportation arrangement 108 comprises a transport mode selector 110, a control unit 112, a protection arrangement 114 to protect the display panel 106 from damage during transportation, and a cable release arrangement 116 operable to decouple any connected cables or connectors from the display device 100 prior to removal.

Each of the protection and cable release arrangements 114, 116 comprises a respective motor drive 118, 120 and motor 122, 124.

In embodiments, the transportation arrangement 108 has two modes of operation, a first, in-use mode (i.e. when the display device is in use, for example when a user is watching television) in which the protection arrangement 114 and cable release arrangement 116 are not activated, and a second, transportation mode in which the protection arrangement 110 and cable release arrangement 112 are activated.

In embodiments, the second, transportation mode may be activated electronically through the transport mode selector 110. This may comprise, for example, the pressing of a button by the user on either the display device 100 itself, a button on a remote control (not shown) or selection of a menu item or icon on an on screen display (OSD) of the display device 100.

Once the transport mode is selected by the selector 110, the control unit 112 is operable to send a control command to one or both of the protection arrangement 114 and cable release arrangement 116 to activate these arrangements.

The protection arrangement 114 will be described first. The protection arrangement 114 is activated when the transport mode is selected by the user using the transport mode selector 110. The protection arrangement 114 is arranged to deploy mechanical protection elements to assist in protecting the display panel 106 from damage during removal, transport and installation of the display device 100.

In embodiments, the protection arrangement 114 comprises movable mechanical elements to act as physical barriers to shocks, impacts and to provide local strengthening for the display device 100.

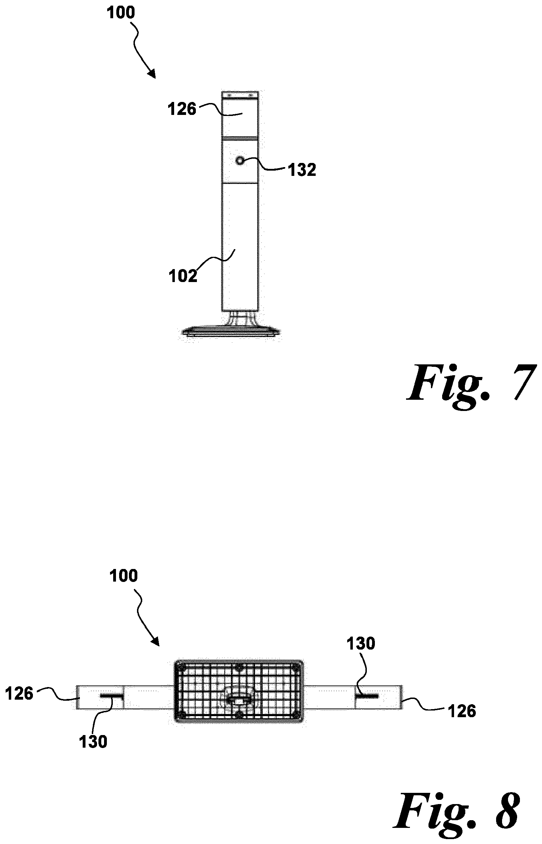

In embodiments, the protection arrangement 114 comprises movable mechanical projections 126 which are movable between a first, stored position (as shown in Figure 2) and a second, extended position (as shown in Figures 4 to 8).

When in the stored position (Figure 2), the mechanical projections 126 lie flush with the housing 102 and form part of the external surface of the housing 102. In other words, the mechanical projections 126 form part of the sides of the bezel of the housing 102 and are visually unobtrusive and may be, effectively, invisible to the user.

When the transport mode is activated, the mechanical projections 126 are extended to project from the sides of the display device 100 as shown in Figures 4 to 8 in order to protect the display device 100 and, in optional embodiments, to act as transportation handles for the display device.

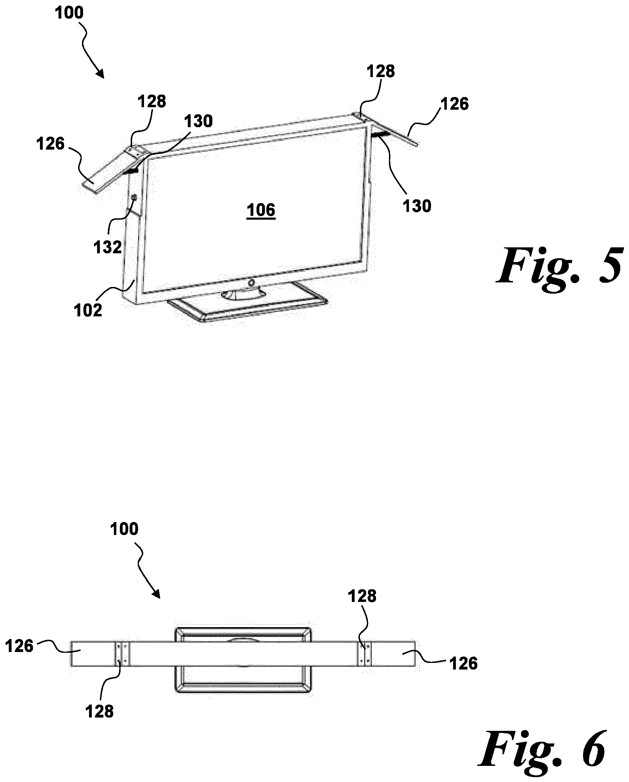

Turning to the protection arrangement 114 in detail, with reference to Figures 4 to 8, the protection arrangement comprises the mechanical projections 126. The mechanical projections 126 are pivoted about hinges 128 (Figures 5 and 6) which are located on the upper corners of the housing 102 and bezel. The mechanical projections 126 comprise planar and rectangular elements which lie flush with the remainder of the housing 102 and bezel when not in use but pivot outwardly to extend parallel to the display panel 106. The mechanical projections 126 extend for, when in the stored position, approximately 40-50% of the height of the housing 102. In embodiments, the mechanical projections 126 may be snap-fitted as required.

The protection arrangement 114 further comprises a mechanical activation system operable to automatically move the mechanical projections 126 from the first, stored, position to the second, extended position. As shown in Figures 4 to 8, the protection arrangement 114 further comprises a pair of spring-loaded arms 130 arranged to extend and maintain the mechanical projections 126 in an extended position.

In addition, the motor drive 118 and motor 120 are configured to operate a push pin 132 located in each side of the housing 102. The push pins 132 are, when activated, operable to push the mechanical projections 126 away from the sides of the housing 102 and allow the mechanical projections 126 to extend under the resilient bias of the spring-loaded arms 130.

The push pins 132 are activated by operation of the motor 120 after a transport mode selector 110 command is received and processed by the control unit 112, which issues a command to the protection arrangement 114 to deploy the mechanical projections 126 or mechanical arms.

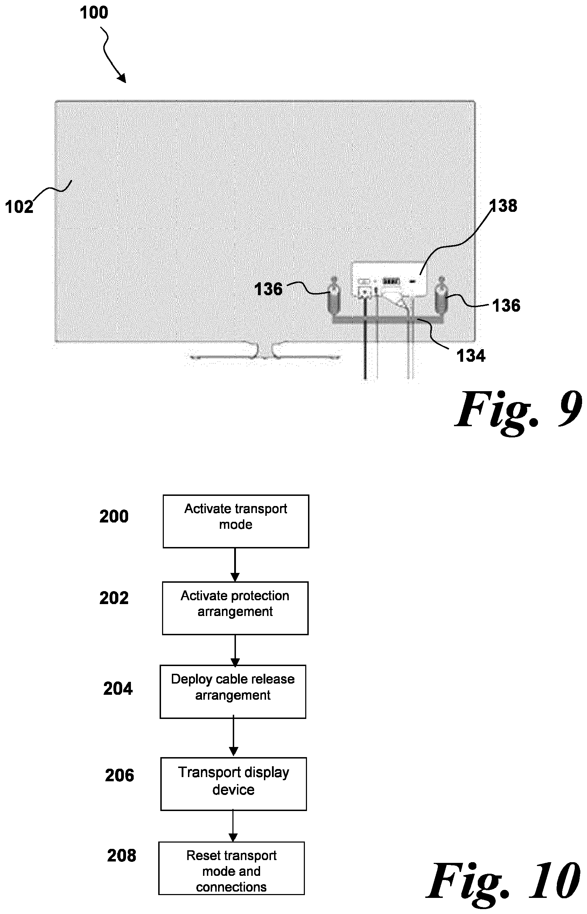

Turning now to the cable release arrangement 116, with reference to Figure 9, the cable release arrangement comprises a mechanical configuration comprising (Figure 9) a clamp 134 and spring pins 136.

In use, the motor drive 122 and motor 124 are operable to release the clamp 134 and the spring pins 136 will then open and pull away any connected cables or other external connections from the sockets 138 at the rear of the display device 100. These connectors may include, but are not limited to: HDMI connectors; S-Video connectors; DVI connectors; optical connectors; audio connectors; power connectors; and/or external aerial connectors.

In other words, when the transport mode is activated through a user interaction with the transport mode selector 110, the control unit 112 issues a signal to the cable release arrangement 116 to activate the motor drive and motor 122, 124 and cause the clamp 134 to be opened and move away from the rear of the display device 100 causing all external connections to the display device 100 to be removed from the display device 100 prior to removal of the display device 100 for transportation and subsequent reinstallation.

This arrangement and method is a convenient approach to enable a display device 100 to be removed from an installation without risk of damage. For examples, in a conventional known display device, a user may attempt to lift the display device 100 in a situation where the external physical cable connections have not been removed. This may cause the display device 100 to fall to the floor, or the user to experience inconvenience during removal.

By the method of the present invention, when the user selects the transport mode from an options menu on the OSD of the display device 100, or via a button on a remote control or on the housing 102 of the display device 100, the connected cables are swiftly and effectively removed prior to the user removing the display device.

This allows convenient removal of a display device without the risk of contacting or catching wires on elements which may cause damage to the display device 100. In addition, in the deployment of the mechanical protection arms 126 can assist in preventing damage to the display panel 106 of the display device 100.

In summary, activation of the second, transportation mode will cause two actions to occur. Firstly, the cable release arrangement 116 will decouple any connected cables or connectors from the display device 100. In other words, when the transport mode is activated, the external source connections connected to the TV will be safely disconnected without being damaged by the mechanical clamp and spring system.

At the same time, the protection arrangement 114 will be activated and will deploy the mechanical elements 126 (in embodiments, these elements may comprise snap-on mechanical arms) on the sides of the housing 102 of the display device 100 and the display device 100 will be ready for removal and carriage. After transport, the end user will be able to manually close the mechanical elements 126 which are held open by the resilient bias of the spring-loaded arms 130.

However, it is also within the scope of the present disclosure for only the mechanical elements 126 to deploy. For example, the user may have previously disconnected the cable connectors and so automatic disconnection of these elements may not be required. This may be set by a user in, for example, an options menu.

A method according to an embodiment of the invention will now be described with reference to Figure 10.

### Step 200: Activate transport mode

At step 200, the transport mode is activated by the end user. This may be through any suitable means - for example, the user may select the transport mode from an option menu on the on-screen display (OST). Alternatively, the user may select the transport mode manually using a button either on a remote control (not shown) or a physical buttom on the housing 102 of the display device 100.

When the transport mode is activated, the method proceeds to step 202.

### Step 202: Activate protection arrangement

When the transport mode is activated at step 200, the control unit 112 is operable to send a command to the protection arrangement 1142 activate The motor 118 fire the motor drive 118 and deploy the push pins 132 on each side of the housing 102.

This causes the mechanic arms 126 to be deployed through the resilient bias of the spring-loaded arms 130. When the spring-loaded arms 130 are deployed, the risk of damage to the display panel 106 is reduced.

The method proceeds to step 204.

### Step 204: Deploy cable release arrangement

When the transport mode is activated in step 200, the control unit 112 sends a control command to the cable release arrangement 116, including motor drive 122 and motor 124.

When activated, the motor 124 releases the clamp 134 connected to the connections on the rear of the display device 100. In other words, the motor 124 has a shaft which is operable to push the clamp sections 134 apart, causing the spring pins 136 to bias the clamp portions away from the connected cables and release the cables from the display device 100.

In other words, when the cable release arrangement 116 is activated, the motor 124 is operable to cause the connection cables to be released from the rear of the display device 100 for straightforward removal of the display device 100 from its installation location.

As noted above, this step may be optional.

The method proceeds to step 206.

### Step 206: Transport display device

Once the connections are released in step 204, and the mechanical elements 126 are deployed in step 202, the display device 100 is ready for removal and transportation. When the device has been transported to a new location, the method proceeds to step 208.

### Step 208: Reset transport mode and connections

As an optional step, the mechanical arms 126 can be manually pushed back into the first, closed position where they lie flush with the housing 102 and bezels of the display device 100. In addition, the connections can be re-attached at the rear of the display device 100, and the clamp 134 and spring-loaded pins 136 reset to clamp the connections and maintain a secure connection to the connection cables and connectors at the rear of the display device 100.

However, this is an optional step, and may, in embodiments be carried out automatically by the protection arrangement 114 and/or cable release arrangement 116. In other words, the arms may be mechanically retracted if desired, and the clamps maybe make it automatically engaged once the connections are established at the rear of the display device 100.

Either way, once the respective connections and arms are reset, the user can again activate the transport mode from either the OSD of the display device 100 or via a mechanical button as described above when it is again desired to move or relocate the display device 100.

By providing such an arrangement, a display device 100 can be transported effectively with low risk of damage to the display panel 106. Therefore, narrower and weaker bezels and housing 102 can be provided, providing visual improvements and improved aesthetics for the user without increased risk of damage to the display panel 106.

Variations will be obvious to the skilled person. For example, whilst the mechanical elements 126 or arms are shown as extending away from the sides of the display device 100, this not need to be the case. For example, the arms may extend laterally from within the display device 100 to an external position thereof in a sliding motion along an axis parallel to the planar display panel 106. Alternatively, the arms 126 may deploy from the upper or lower surfaces of the housing 102, or a plurality of arms may be provided on each side or upper or lower surface of the housing 102. The skilled person will be readily aware of variations which would fall within the scope of the present disclosure.

In addition, the cable release arrangement 116 may take other suitable forms. For example rather than a clamp and spring arrangement. For example, a pivotable arm, or articulated arm may be used to pull the connections away from the rear of the display device 100 and release the connections and connectors.

In addition, whilst the above embodiments have been described with reference to the use of a motor and motor shaft or push pin, this need not be the case. For example the mechanical elements 126 may be held in place through other interactions, for example electromagnetic or other connections which can be released electronically or automatically upon activation of the transport mode.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention.

## Claims

1. A display device comprising an outer housing and a display panel arranged within the outer housing, the display device further comprising one or more protection elements, wherein each protection element is automatically movable between a first position in which the protection element is stored during normal use of the display device and a second position in which the protection element extends from the outer housing to protect the display device during transportation in response to a user command.

2. A display device according to claim 1, wherein the or each protection element comprises a mechanical arm arranged to pivot away from a surface of the housing.

3. A display device according to claim 1 or 2, wherein the or each protection element is biased from the first to the second position by means of a biasing arrangement.

4. A display device according to any one of the preceding claims, wherein the movement of the or each protection element is actuated by electronic means.

5. A display device according to claim 4, wherein the movement of the or each protection device is actuated by a motor.

6. A display device according to any one of the preceding claims, wherein the protection element is configured to form a part of the outer housing when in the first position.

7. A display device according to any one of the preceding claims, wherein in the second position the or each protection element extends from the sides of the display device.

8. A display device according to any one of the preceding claims, wherein the display device further comprises a cable release arrangement having first and second positions, wherein in the first position the cable release arrangement is configured such that one or more cable connectors remain connected to the respective connector ports of the display device and in the second position the cable support arrangement is configured to release the cables from the display device, wherein the cable release arrangement is automatically movable from the respective first position to the respective second position in response to the user command.

9. A display device according to claim 8, wherein the cable release arrangement comprises one or more clamps and/or one or more biasing arrangements.

10. A display device according to claim 8 or 9, wherein the cable release arrangement is movable electronically.

11. A display device according to claim 8, 9 or 10, wherein the cable release arrangement is movable by means of a motor.

12. A method for protecting a display device during transportation, the display device comprising an outer housing and display panel arranged within the outer housing, method comprising the steps of:
a) activating, in response to a user command, a transportation mode of the display device, and in response to said activation:
b) automatically moving one or more protection elements of the display device from a first position in which the or each protection element is stored during normal use of the display device to a second position in which the protection element extends from the outer housing to protect the display device during transportation.

13. A method according to claim 12, further comprising:
c) automatically moving a cable release arrangement from a first position in which the cable release arrangement is configured such that one or more cable connectors remain connected to the respective connector ports of the display device to a second position in which the cable support arrangement is configured to release the cables from the display device.

14. A method according to claim 12 or 13, wherein the one or more protection elements are actuated electronically to move from the respective first position to the respective second position.

15. A method according to claim 14, wherein, once actuated, the or each protection element is biased from the first to the second position by means of a biasing arrangement.
